# EUROPÄISCHE PATENTSCHRIFT

(11) **EP 0 564 777 B1**
(45) Veröffentlichungstag und Bekanntmachung des Hinweises auf die Patenterteilung: **04.06.1997**
(21) Anmeldenummer: 93102025.9
(22) Anmeldetag: 10.02.1993
(51) Int. Cl.: B60P 3/32, B60P 3/14

(54) **Arbeitscontainer für Kleinbaustellen**
Workers caravan for small building sites
Roulotte pour petits chantiers

(30) Priorität: 04.04.1992 DE 9204647 U; 30.09.1992 DE 4232791
(43) Veröffentlichungstag der Anmeldung: 13.10.1993
(73) Patentinhaber: Landt, Thomas, D-50737 Köln (DE)
(72) Erfinder: Landt, Thomas, D-50737 Köln (DE)
(74) Vertreter: Schulte, Jörg, Dipl.-Ing.

(56) Entgegenhaltungen:
- EP-A- 0 294 782
- CH-A- 450 188
- DE-A- 1 915 962
- DE-A- 2 856 419
- DE-U- 1 876 875
- DE-U- 1 927 897
- DE-U- 6 906 687
- FR-A- 1 346 115
- GB-A- 2 220 171

## Beschreibung

Die Erfindung betrifft einen Baustellenwagen mit einem Fahrgestell, einem Stahlprofilrahmen (2) und einem damit verbundenen Aufbau, der einen dem jeweiligen Anwendungszweck entsprechend ausgerüsteten Innenraum sowie Tür und Fenster aufweist, wobei der Stahlprofilrahmen mit einem Fahrgestell zu verbinden oder mit Standfüßen auszurüsten ist.

Derartige Container, insbesondere Baustellenwagen werden bei Großbaustellen häufig mit anderen Ver- und Entsorgungsräumlichkeiten darstellenden Container zu ganzen, stationären Büro- und Nutzeinheiten zusammengefügt. So ist es beispielsweise bekannt, gesonderte Toilertenwagen mit Sitztoilette und Urinal sowie Waschraum auszurüsten, wobei bei Bedarf auch für beide Geschlechter getrennte Anlagen zur Verfügung gestellt werden. Die Container sind getrennt vom Fahrgestell aufstellbar ausgerüstet, verfügen also in der Regel nur für den Transport über ein Fahrgestell (GB-A-2 220 171). Für kleine Baustellen dagegen lohnt es sich nicht, eine Vielzahl derartiger Container aufzustellen, weil die Baustelle nur relativ kurz besetzt und weil dort nur wenige Arbeiter tätig sind. Dies gilt zum Beispiel für die im Garten- und Landschaftsbau eingerichteten Baustellen, wo häufig nur zwei oder drei Mitarbeiter für einige Tage tätig sind. Sind die notwendigen Container nicht vorhanden, bleibt dem Mitarbeiter nichts anderes übrig, als "hinter dem Gebüsch zu verschwinden". Hinzukommt, daß für mehrere derartiger Container bei diesen kleinen Baustellen keine Abstellfläche vorhanden ist.

Der Erfindung liegt daher die Aufgabe zugrunde, einen für kleine nur kurzzeitig und mit wenigen Mitarbeitern bestückte Baustellen geeigneten, den jeweiligen individuellen Baustellenbedürfnissen anpaßbaren und leicht und schnell von Baustelle zu Baustelle verbringbaren Ver- und Entsorgungscontainer zur Verfügung zu stellen.

Die Aufgabe wird erfindungsgemäß dadurch gelöst, daß auf einem mit dem Fahrgestell verbundenen Stahlprofilrahmen mehrere, Wände, Dach und Boden aufweisende und als unterschiedliche Ver- und Entsorgungsräumlichkeiten dienende Einheiten angeordnet sind, die zusammen oder einzeln dem jeweiligen Bedarf entsprechend zusammenstellbar mit dein Stahlprofilrahmen bzw. Fahrgestell verbunden sind.

Durch ein so geschaffenes Baukastensystem ist die Möglichkeit geschaffen, auch für Kleinstbaustellen alle notwendigen und von Arbeitsstättenverordnung vorgeschriebenen Ver- und Entsorgungsräumlichkeiten zur Verfügung zu stellen. Dabei können die Einheiten vorteilhaft der jeweiligen Baustelle entsprechend zusammengestellt oder aber von vornherein in einer bestimmten Kombination zur Verfügung gestellt werden. Da alle diese Einheiten einem einzigen Fahrgestellt zugeordnet sind, kann diese Kompletteinheit von Kleinbaustelle zu Kleinbaustelle mitgenommen werden, wobei davon auszugehen ist, daß der dafür benötigte relativ geringe Platz auf jeder derartigen Baustelle zur Verfügung steht.

Nach einer zweckmäßigen Ausbildung der Erfindung ist vorgesehen, daß die Einheiten als Ruheraumeinheit, Toiletteneinheit und Magazineinheit ausgebildet sind. Damit ist der Arbeitsstättenverordnung genüge getan und darüber hinaus den auf der Kleinbaustelle tätigen Mitarbeitern alles an Material und Geräten zur Verfügung gestellt, was dort benötigt wird. Damit wird gleichzeitig auch verhindert, daß wegen fehlenden Gerätes einer der Mitarbeiter zum Zentralbetrieb fahren muß, um das fehlende Gerät zu holen. Die direkte vor Ort geleistete Arbeitszeit kann damit erhöht werden. Vor allem aber können den Mitarbeitern einwandfreie hygienische Toiltetteneinheiten zur Verfügung gestellt werden, die so abgeschlossen sind, daß sie auch von den Mitarbeitern angenommen werden und die leicht sauber gehalten werden können. Damit ist die notwendige Akzeptanz gewährleistet, wobei auch der Ruheraum so ausgebildet werden kann, daß mit Hilfe einer entsprechenden Belüftung gute Raumverhältnisse zur Verfügung stehen. Eine ergonomisch einwandfreie Gestaltung der gesamten Räumlichkeiten kann auf diese Art und Weise verwirklicht werden.

Um die ergonomischen und die klimatischen Verhältnisse insbesondere in der Ruheraumeinheit optimal Zu gestalten, sieht die Erfindung vor, daß die Ruheraumeinheit und die Toiletteneinheit wärmeisolierte Wände und Dach und Boden aufweisen und mit einer Heizung ausgerüstet sind. Insbesondere in der kalten Jahreszeit aber auch im Sommer können so optimale Raumverhältnisse vorgegeben und eingehalten werden, wodurch die entsprechende Tätigkeit gleichzeitig auch wesentlich attraktiver gestaltet werden kann. So ist beispielsweise auch die Möglichkeit gegeben, daß sich die Mitarbeiter vor der Arbeit und nach der Arbeit umziehen und sich damit so herrichten können, daß sie in normaler Straßenkleidung zur Arbeitsstelle sich hin- und wieder von ihr wegbewegen können.

Aufgrund der optisch schönen Ausbildung eines derartigen Containers kann dieser gleichzeitig auch für Werbezwecke sowohl für den Berufsstand wie auch den jeweiligen Betrieb benutzt werden. Hierzu sieht die Erfindung vor, daß der Aufbau oder jede Einheit ein auf den Industriezweig hinweisendes Signum sowie eine entsprechende Farbgebung und zweckmäßig auch eine Werbefläche aufweist. Für den Garten- und Landschaftsbau wird dabei eine Farbgebung Ral 6011 vorzusehen sein, so daß schon von weitem zu erkennen ist, welcher Berufszweig auf der jeweiligen Baustelle gerade tätig ist. Gleichzeitig ist damit für die Mitarbeiter ein Anreiz gegeben, den Container auch in der optisch optimalen Form zu halten, zumal dann, wenn die Werbeflächen vorhanden und vom jeweiligen Betrieb genutzt werden.

In der Magazineinheit werden Ersatzteile und Gerätschaften vorgehalten, die auch für Dritte interessant sein können. Um einem Diebstahl vorzubeugen, sieht die Erfindung vor, daß die Magazineinheit nur über eine Zugangstür und eine Dachbelüftung verfügt. Es versteht sich, daß die Magazineinheit wie auch die anderen Einheiten eine Beleuchtung aufweisen, so daß hier bei der Magazineinheit insbesondere auf Fenster verzichtet werden kann. Die Zugangstür kann ohne allzu große Probleme so gesichert werden, daß Dritte ohne weiteres keinen Zutritt erzwingen können.

Die Toiletteneinheit mit einer Zwangsbelüftung zu versehen, wobei auch an Fenster zu denken ist, die dann wiederum blickdicht auszurüsten sind. Besonders vorteilhaft ist es, wenn die Toiletteneinheit erfindungsgemäß zwischen der Magazin- und der Ruheraumeinheit auf dem Stahlprofilrahmen bzw. Fahrgestell angeordnet ist. Beide Einheiten schließen die Toiletteneinheit ein, so daß diese Räumlichkeiten gleichzeitig auch dem Benutzer die notwendige Ruhe gewähren. Vorteilhaft ist außerdem, daß auf diese Art und Weise auch in der kalten Jahreszeit für diese empfindlichste der Einheiten ein natürlicher Schutz mit vorgegeben wird.

Sowohl aus optischen wie auch aus zweckmäßigen Gründen ist es vorteilhaft, wenn die Zugangstüren der einzelnen Einheiten jeweils in der gleichen Seitenwand ausgebildet sind. Dies hat zunächst den Vorteil, daß dann nur eine Zugangsseite notwendig ist, d.h. der Container kann mit der anderen Längsseite beispielsweise oder auch den Kopfseiten so eingeparkt oder eingestellt werden, daß von dort ein Zugang nicht möglich ist. Darüber hinaus ist auch optisch einfach eine günstigere Ausbildung mit dem Zugang von einer Seite her erreicht. Der Innenraum der häufig genutzten Teile des Containers wird wesentlich wohnlicher gestaltet, wenn die Zugangstüren der Toiletten- und der Ruheraumeinheit neuerungsgemäß innenseitig mit einem Windfangtuch ausgerüstet sind. Beim Öffnen der Zugangstüren bleibt der ja geheizte Innenraum zunächst einmal unbeeinflußt, so daß nicht nur ergonomische, sondern auch wirtschaftliche Vorteile damit verbunden sind.

Auch die Toiletteneinheit als solche wird erfindungsgemäß optimiert, indem die Toiletteneinheit in Raumzellen mit Sitztoilette und Urinal unterteilt und mit einer Waschebeckeneinheit ausgerüstet ist. Damit ist für die Benutzung der Toiletteneinheit die notwendige Individualität gewahrt, wobei auch die Urinals untereinander durch Zwischenwände abgetrennt oder gegen den übrigen Raum beispielsweise die Waschbeckeneinheit abgetrennt sein können. Die Waschbeckeneinheit ihrerseits ist wieder für die Hygiene sehr wichtig, so daß insgesamt durch die Ausbildung der Toiletteneinheit und ihrer Anordnung eine hohe Akzeptanz erreicht ist.

Die Toiletteneinheit als solche kann als Wasser- oder Chemietoilette ausgebildet sein, wobei gemäß der Erfindung die Toiletteneinheit auf jeden Fall eine abtrennbare Entsorgung aufweist, so daß auch hierdurch wiederum Geruchslästigungen weitgehend ausgeschlossen werden können, zumal diese abtrennbare Entsorgungseinheit außen am Container angeordnet ist, somit leicht entnommen und ausgetauscht werden kann.

Der erfindungsgemäße Container mit mehreren zusammenstellbaren oder zusammengestellten Einheiten kann unter dem Slogan "1-2-3-Immer alles dabei" gesehen und angeboten werden, da erstmals über eine solche Gestaltung auch für kleinere Baustellen die Möglichkeit gegeben ist, diese Baustelle sauberzuhalten und für die Mitarbeiter attraktiv. Die erfindungsgemäße Containerbauweise nach dem Baukastenprinzip erstellt, erfüllt die Bedingungen der Arbeitsstättenverordnung, so daß es auch für den Unternehmer vorteilhaft ist, eine solche Gesamteinheit zur Verfügung zu halten und den Mitarbeitern zur Verfügung zu stellen. Gerade in Zeiten von Facharbeitermangel kommt der erfindungsgemäßen Lösung somit eine erhebliche Bedeutung zu, weil diesen Mitarbeitern eine hygienisch einwandfreie Arbeitsstelle zur Verfügung gestellt werden kann. Gerade die zwar interessante, aber schwere Arbeit im Garten- und Landschaftsbau wird attraktiver gestaltet, wenn die Mitarbeiter zur Arbeitsstelle und von der Arbeitsstelle in normaler Straßenbekleidung fahren, sich also insbesondere nach der Arbeit wieder so herrichten können, daß sie auch in dieser Bekleidung sich bewegen können. Die Container können entweder einem Fahrgestell dauernd zugeordnet oder einem lösbaren Fahrgestell zugeordnet werden, so daß die Möglichkeit besteht, auch bei nur kurz besetzten Arbeitsstellen doch immer einen solchen vielseitig verwendbaren Container mit den verschiedenen benötigten Einheiten zur Verfügung zu halten.

Weitere Einzelheiten und Vorteile des Erfindungsgegenstandes rgeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: einen Container mit Fahrgestell in Seitenansicht,
- Fig. 2: einen ähnlich ausgebildeten Container in Vorkopfansicht und
- Fig. 3: einen Grundriß eines in Fig. 1 bzw. 2 dargestellten Containers.

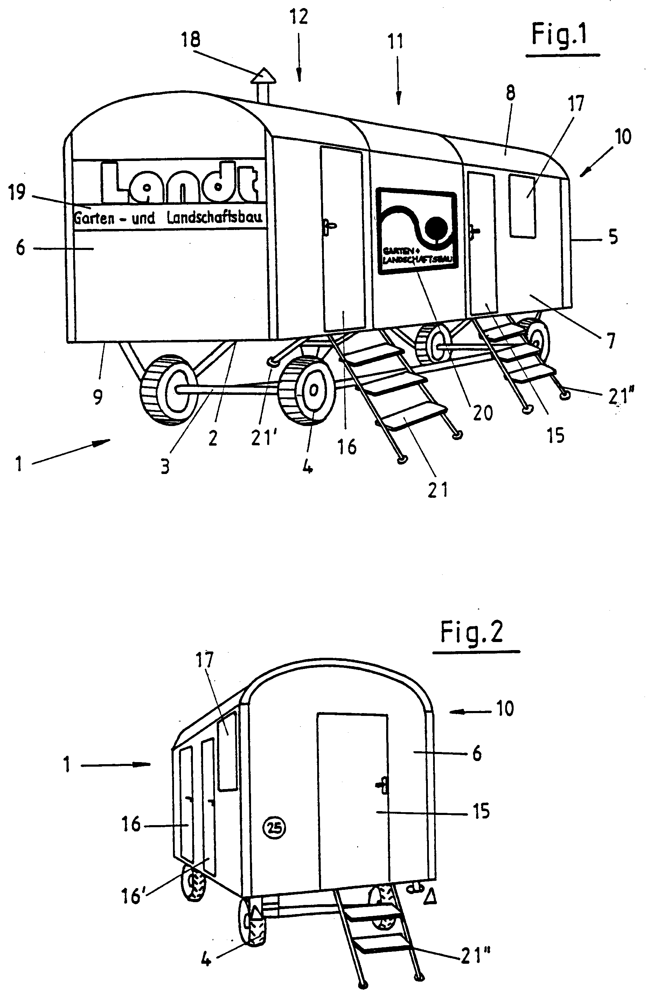

Der in Fig. 1 wiedergegebene Container (1) weist im wesentlichen die Konturen eines an sich bekannten Baustellenwagens auf. Er verfügt beispielsweise über eine Länge von 6 bis 8 m und eine Breite von 2,40 m sowie eine Raumhöhe von ebenfalls 2,40 m.

Der Gesamtcontainer (1) verfügt über einen Stahlprofilrahmen (2), so daß er oder auch die einzelnen Teile einem Fahrgestell (3) mit Rädern (4) zugeordnet werden kann.

Der Aufbau (5) des Containers verfügt über Wände (6) und Seitenwände (7) sowie über ein gebogenes Dach (8) und Boden (9).

Fig. 1 verdeutlicht, daß der Gesamtcontainer (1) aus mehreren Einheiten besteht, wobei die Ruheraumeinheit mit (10), die Toiletteneinheit mit (11) und die Magazineinheit mit (12) bezeichnet ist. Diese Einzelbereiche sind mit Einheit (10, 11, 12) bezeichnet, um zu verdeutlichen, daß sie als solche geschlossene Bereiche darstellen, die einzeln zu begehen, ggfs. aber auch miteinander zu verbinden sind. Bei dem dargestellten Beispiel bilden alle drei Einheiten (10, 11, 12) zusammen den Container (1), der alle Bereiche beinhaltet, die für eine Baustelle insbesondere hier die Kleinbaustelle benötigt werden.

Die Ruheraumeinheit (10) verfügt über eine Zugangstür (15), die ebenso wie die Zugangstür (16) der Magazineinheit (12) sichtbar ist. Bei dem hier dargestellten Beispiel ist die Toiletteneinheit (11) von der anderen Seite her begehbar und verfügt dementsprechend, wie auch die anderen Einheiten (10 und 12), über eine Treppe (21 bzw. 21' bzw. 21''). Die Ruheraumeinheit (10) ist mit einem Fenster (17) ausgerüstet, während die Magazineinheit (12) bewußt nur die Zugangstür (16) und eine Dachbelüftung (18) aufweist, um auf diese Art und Weise eine günstige und einfache Diebstahlsicherung zu ermöglichen.

Insbesondere die Wand (6) vor Kopf eignet sich als Reklamefläche (19), was bei Fig. 1 durch einen entsprechenden Aufdruck verdeutlicht wird. Außerdem ist der Container (1) mit der Farbgebung für GaLa-Bau versehen, nämlich Ral 6011. Zusätzlich zeigt das Signum (20) an, daß es sich hier um den GaLa-Bau, also den Garten- und Landschaftsbau handelt.

Fig. 2 zeigt einen ähnlich aufgebauten Container (1), nur daß hier eine der Einheiten von der Kopfseite aus zu begehen ist. Nimmt man die Aufteilung gemäß Fig. 1, die den großen Vorteil hat, daß die Toiletteneinheit (11) zwischen den beiden anderen Einheiten (10, 12) angeordnet ist, so handelt es sich bei der von der Kopfseite her begehenden Einheit um die Ruheraumeinheit (10).

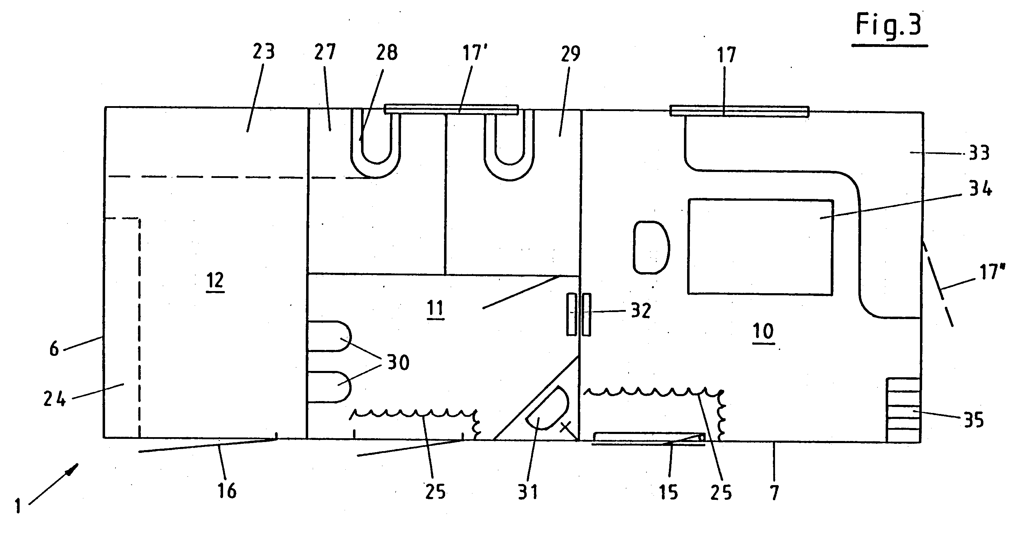

Fig. 3 zeigt einen Grundriß des Containers (1) nach Fig. 1, wobei abweichend von der Darstellung in Fig. 1 hier alle Zugangstüren (15, 16) auf der gleichen Seitenwand (7) ausgebildet sind.

Die Magazineinheit (12) verfügt über ein Regal (23) oder mehrere Regale sowie einen Ständer (24) für die benötigten Gerätschaften. Auch auf der gegenüberliegenden Wand kann ein solcher Ständer oder können Regale auch ein Werktisch angeordnet werden, um auf diese Art und Weise alle für die jeweilige Baustelle benötigten Teile und Gerätschaften vorzuhalten. Dieses Magazin bzw. die Magazineinheit (12) gibt dem Unternehmer die Möglichkeit, durch entsprechende geschickte Bestückung die Arbeitszeit vor Ort zu erhöhen. Die Zugangstür (16) kann aus Stahl bestehen oder entsprechend so gesichert sein, daß der ansonsten eine geschlossene Einheit darstellende Raum der Magazineinheit (12) einbruchsicher ist.

Die Zugangstüren (15) von Ruheraumeinheit (10) und Toiletteneinheit (11) sind mit einem Windfangtuch (25) versehen, so daß der Komfort dieser Räumlichkeiten wesentlich verbessert ist.

Die Toiletteneinheit (11) ist, wie Fig. 2 verdeutlicht, in mehrere Raumzellen (27, 29) mit Sitztoilette unterteilt. Darüber hinaus ist ein Vorraum vorhanden, in dem ein oder mehrere Urinale (30) an der Zwischenwand angebracht sind. Dieser Bereich kann durch eine Sichtwand abgetrennt werden, um auch hier den Komfort zu verbessern und es ist auch denkbar, daß eine der beiden Raumzellen (27, 29) von der Außenwand bzw. von der Seitenwand her begehbar ist, wenn die Baustelle mit Mitarbeitern beider Geschlechter besetzt ist.

Die Waschbeckeneinheit (31) im Vorraum der Toiletteneinheit (11) gibt den Mitarbeitern die Möglichkeit, nicht nur nach Benutzung der Toilette sich zu waschen, sondern auch nach getaner Arbeit, so daß ihnen die Möglichkeit gegeben ist, im normalen Straßenanzug nach Hause zu fahren.

Der Grundriß des Containers (1) verdeutlicht, daß nicht alle Einheiten (10, 11, 12) die gleiche Quadratmeterzahl aufweisen. Vielmehr kann dies der jeweiligen Nutzung entsprechend eingerichtet werden, wobei die Magazineinheit (12) naturgemäß den kleinsten Raumanspruch hat. Den größten Raumanspruch hat sicherlich die Ruheraumeinheit (10), wobei der Grundriß nach Fig. 3 zeigt, daß beispielsweise über die Sitzbank (33) und den Tisch (34) eine gewisse Wohnlichkeit vorgegeben werden kann. Außerdem ist sowohl die Toiletteneinheit (11) wie die Ruheraumeinheit (10) mit einer Heizung (32) versehen und zumindest die Ruheraumeinheit (10) auch mit Fenstern (17). Um den Mitarbeitern die Möglichkeit zu geben, sich jeweils am Arbeitsplatz umzuziehen, ist hier in der Ruheraumeinheit (10) auch an einer der Wände eine Vielzahl von Spinten (35) angeordnet, wobei hier noch eine Waschgelegenheit vorgesehen werden kann, was insbesondere dann von Vorteilist, wenn aus irgendwelchen Gründen ein solcher Container (1) ohne eine Toiletteneinheit (11) aufgestellt werden sollte. Nur ist dann eine gesonderte Entsorgung notwendig, während bei der Ausbildung nach Fig. 3 der Vorteil, daß alle zu entsorgenden Bereiche der Toiletteneinheit (11) zugeordnet sind. Diese Entsorgung ist im einzelnen in den beschriebenen Figuren nicht dargestellt, wobei sie dem Boden (9) zugeordnet wird, um sie außerhalb der eigentlichen Einheiten (10, 11, 12) halten zu können und besser auswechseln zu können.

## Patentansprüche

1. Baustellenwagen mit einem Fahrgestell (3), einem Stahlprofilrahmen (2) und einem damit verbundenen Aufbau (5), der einen dem jeweiligen Anwendungszweck entsprechend ausgerüsteten Innenraum sowie Tür (15, 16) und Fenster (17) aufweist, wobei der Stahlprofilrahmen (2) mit dem Fahrgestell (3) zu verbinden oder mit Standfüßen auszurüsten ist,
**dadurch gekennzeichnet,**
daß auf einem mit dem Fahrgestell (3) verbundenen Stahlprofilrahmen (2) mehrere, Wände (6, 7), Dach (8) und Boden (9) aufweisende und als unterschiedliche Ver- und Entsorgungsräumlichkeiten dienende und den Aufbau (5) bildende Einheiten (10, 11, 12) angeordnet sind, die zusammen oder einzeln dem jeweiligen Bedarf entsprechend zusammenstellbar mit dem Stahlprofilrahmen (2) bzw. dem Fahrgestell (3) verbunden sind.

2. Container nach Anspruch 1,
**dadurch gekennzeichnet,**
daß die Einheiten (10, 11, 12) als Ruheraumeinheit (10), Toiletteneinheit (11) und Magazineinheit (12) ausgebildet sind.

3. Container nach Anspruch 1,
**dadurch gekennzeichnet,**
daß die Ruheraumeinheit (10) und die Toiletteneinheit (11) wärmeisolierte Wände (6, 7) und Dach (8) und Boden (9) aufweisen und mit einer Heizung (32) ausgerüstet sind.

4. Container nach Anspruch 1,
**dadurch gekennzeichnet,**
daß der Aufbau (5) oder jede Einheit (10, 11, 12) ein auf den Industriezweig hinweisendes Signum (20) sowie eine entsprechende Farbgebung aufweist.

5. Container nach Anspruch 1,
**dadurch gekennzeichnet,**
daß daß die Magazineinheit (12) nur über eine Zugangstür (16) und eine Dachbelüftung (18) verfügt.

6. Container nach Anspruch 1 und Anspruch 2,
**dadurch gekennzeichnet,**
daß die Toiletteneinheit (11) zwischen der Magazin- und der Ruheraumeinheit (10, 12) auf dem Stahlprofilrahmen (2) bzw. dem Fahrgestell (3) angeordnet ist.

7. Container nach Anspruch 1 und Anspruch 2,
**dadurch gekennzeichnet,**
daß die Zugangstüren (15, 16) der einzelnen Einheiten (10, 11, 12) jeweils in der gleichen Seitenwand (7) ausgebildet sind.

8. Container nach Anspruch 1 oder Anspruch 2,
**dadurch gekennzeichnet,**
daß die Zugangstüren (15, 16) der Toiletten- (11) und der Ruheraumeinheit (10) innenseitig mit einem Windfangtuch (25) ausgerüstet sind.

9. Container nach Anspruch 2,
**dadurch gekennzeichnet,**
daß die Toiletteneinheit (11) in Raumzellen (27, 29) mit Sitztoilette (28) und Urinal (30) unterteilt und mit einer Waschbeckeneinheit (31) ausgerüstet ist.

10. Container nach Anspruch 9,
**dadurch gekennzeichnet,**
daß die Toiletteneinheit (11) eine abtrennbare Entsorgung aufweist.

## Claims

1. Workers' caravan for building sites with a chassis (3), a steel section framework (2) and a structure (5) connected therewith which comprises an interior compartment, a door (15, 16) and a window (17) equipped according to the respective use, whereby the steel section framework (2) is connectable to the chassis (3) or can be fitted with supporting feet, **characterised in that** there are disposed on a steel section framework (2) connected to the chassis (3) a plurality of units (10, 11, 12) having walls (6, 7), a roof (8) and a floor (9), said units serving as various supply and disposal rooms and forming the structure (5), and which together or individually, depending on the respective requirement, can be assembled and connected with the steel section framework (2) and chassis (3).

2. Container according to claim 1, **characterised in that** the units (10, 11, 12) are designed to be a rest room unit (10), a toilet unit (11) and a storage unit (12).

3. Container according to claim 1, **characterised in that** the rest room unit (10) and the toilet unit (11) have heat-insulated walls (6, 7) a roof (8) and a floor (9) and are fitted with a heating system (32).

4. Container according to claim 1, **characterised in that** the structure (5) or each unit (10, 11, 12) has a sign (20) indicating the branch of industry and an appropriate coloration.

5. Container according to claim 1, **characterised in that** the storage unit (12) has only one access door (16) and roof ventilation (18).

6. Container according to claim 1 and claim 2, **characterised in that** the toilet unit (11) is arranged between the storage and rest room units (10, 12) on the steel section framework (2) and chassis (3).

7. Container according to claim 1 and claim 2, **characterised in that** the access doors (15, 16) of the individual units (10, 11, 12) are both formed in the same side wall (7).

8. Container according to claim 1 or claim 2, **characterised in that** the access doors (15, 16) of the toilet (11) and rest room unit (10) are fitted internally with a draught-excluding curtain (25).

9. Container according to claim 2, characterised in that the toilet unit (11) is subdivided into cells (27, 29) with seat toilets (28) and urinals (30) and is fitted with a wash basin unit (31).

10. Container according to claim 9, characterised in that the toilet unit (11) has a separable disposal facility.

## Revendications

1. Roulotte de chantier équipée d'un châssis (3), d'un cadre profilé en acier (2) et d'une construction (5) fixée sur lui et présentant un espace intérieur équipé en fonction de son utilisation, ainsi que portes (15, 16) et fenêtre (17), le cadre profilé en acier (2) devant être relié au châssis (3) ou devant être équipé de pieds d'appui, caractérisée en ce que, sur un cadre profilé en acier (2), relié au châssis (3), sont placées plusieurs unités (10, 11, 12), présentant murs (6, 7), toit (8) et plancher (9), servant de différents espaces d'approvisionnement et de stockage, et constituant la construction (5), unités qui sont reliées, ensemble ou isolément, en fonction des besoins, avec le cadre profilé en acier (2) ou avec le châssis (3).

2. Conteneur selon la revendication 1, caractérisé en ce que les unités (10, 11, 12) sont conformées en salle de repos (10), toilettes (11) et dépôt (12).

3. Conteneur selon la revendication 1, caractérisé en ce que la salle de repos (10) et les toilettes (11) sont équipées de murs isolés thermiquement (6, 7), d'un toit (8) et d'un plancher (9) et sont munies d'un chauffage (32).

4. Conteneur selon la revendication 1, caractérisé en ce que la construction (5) ou chaque unité (10, 11, 12) présente un élément de signalisation (20) indiquant la branche industrielle, et en ce qu'elle présente la couleur correspondante.

5. Conteneur selon la revendication 1, caractérisé en ce que le dépôt (12) n'est équipé que d'une porte d'accès (16) et d'une ventilation par le toit (18).

6. Conteneur selon la revendication 1 et la revendication 2, caractérisé en ce que les toilettes (11) sont placées, sur le cadre profilé en acier (2) ou sur le châssis (3), entre le dépôt et la salle de repos (10, 12).

7. Conteneur selon la revendication 1 et la revendication 2, caractérisé en ce que les portes d'accès (15, 16) de chaque unité (10, 11, 12) sont placées, chacune, sur la même paroi latérale (7).

8. Conteneur selon la revendication 1 ou la revendication 2, caractérisé en ce que les portes d'accès (15, 16) des toilettes (11) et de la salle de repos (10) sont équipées, à l'intérieur, d'un tissu formant paravent (25).

9. Conteneur selon la revendication 2, caractérisé en ce que les toilettes (11) sont divisées en cellules (27, 29) avec un siège de toilettes (28) et un urinoir (30), et sont équipées d'un lavabo (31).

10. Conteneur selon la revendication 9, caractérisé en ce que les toilettes (11) présentent une évacuation susceptible d'être séparée.
